# EUROPEAN PATENT APPLICATION

(11) **EP 2 101 466 A1**
(43) Date of publication of application: **16.09.2009**
(21) Application number: 08700085.7
(22) Date of filing: 09.01.2008
(51) Int. Cl.: H04L 29/06

(54) **A-INTERFACE-BASED MOBILE COMMUNICATION METHOD,SYSTEM AND EQUIPMENT**

(30) Priority: 12.01.2007 CN 200710007852; 29.05.2007 CN 200710105766; 30.05.2007 CN 200710109356
(71) Applicant: Huawei Technologies Co., Ltd., Shenzhen, Guangdong Province 518129 (CN)
(72) Inventor: LI, Feng, Shenzhen Guangdong Province 518129 (CN); LI, Shijun, Shenzhen Guangdong Province 518129 (CN); WANG, Yong, Shenzhen Guangdong Province 518129 (CN); ZHU, Haopeng, Shenzhen Guangdong Province518129 (CN); YANG, Xinhua, Shenzhen Guangdong Province 518129 (CN); WANG, Hailei, Shenzhen Guangdong Province 518129 (CN); ZHAO, Bo, Shenzhen Guangdong Province 518129 (CN); LUO, Shaohua, Shenzhen Guangdong Province 518129 (CN); LI, Guohong, Shenzhen Guangdong Province 518129 (CN)
(74) Representative: Pfenning, Meinig & Partner GbR
(86) International application number: PCT/CN2008/070061
(87) International publication number: WO 2008/086748

(57) **Abstract**

A mobile communication method based on an A-interface is disclosed. The method includes: establishing an IP bearer channel between a BSS and a core network, where the IP bearer channel passes through an A-interface; and transmitting data between the BSS and the core network through the IP bearer channel, during which the BSS performs no codec conversion. An A-interface based mobile communication system, a mobile communication core network, and a BSS are disclosed. The technical solution under the present invention enhances the conversation quality, reduces the cost of network construction, and improves the utilization ratio of bandwidth.

## Description

### FIELD OF THE INVENTION

The present invention relates to mobile communication, and in particular, to a mobile communication method, a system, and an apparatus based on an A-interface.

### BACKGROUND

A GSM network is composed of two subsystems: Base Station Subsystem (BSS) and Network Subsystem (NSS). The BSS is responsible for user terminal access and provides a radio interface which ensures the user terminal to access the NSS. The NSS provides voice channel switching and constructs various voice services on the voice channel (basic voice conversation, and voice conversation with supplementary services). The interface between the BSS and the NSS is an A-interface. The A-interface is defined in the GSM protocol.

In the existing GSM network, the interface capabilities available from the NSS are limited. Only one type of external interface is available from the NSS, namely, 64 Kbps Time Division Multiplex (TDM) circuit interface. Therefore, the BSS can be interconnected with the NSS only through the 64 Kbps TDM circuit. Meanwhile, the voice channel switching capabilities of the circuit interface are limited because the circuit interface can process only one type of codec format, namely, Pulse Code Modulation (PCM). Therefore, no matter what codec format is applied at the user terminal, the BSS needs to convert the code format to the PCM format before the code stream can be sent to the NSS for switching. Therefore, in the existing GSM network, the BSS needs to support the Transcoder and Rate Adaptation Unit (TRAU) function. Through this function, the BSS can put the PCM code stream into the TDM circuit after finishing the foregoing codec conversion, and then transfer the PCM code stream to the NSS.

In the process of research and practice, the inventor of the present invention finds that in the foregoing GSM architecture, the prior art is defective in the following aspects: the quality of voice conversation is deteriorated, the cost for constructing network is high, and the utilization ratio of bandwidth is low.

1. The quality of voice conversation is deteriorated.

The voice channel always needs to perform codec conversion before switching. For the mobile-to-mobile calls, even if the voice codec function is supported between two user terminals, the codec conversion always needs to be performed twice (the user terminal encodes and decodes the code stream and sends it to the PCM, and then the PCM encodes and decodes the code stream and sends it to the user terminal). The codec conversion involves loss of voice quality, and this reduces the voice quality in the conversation. If the NSS has evolved to bear Internet Protocol (IP) payload, when voice channel switching is performed through compressed voice codec operation inside the NSS, the codec conversion needs to be performed for four times (the user terminal encodes and decodes the code stream and sends it to the PCM, the PCM performs compressed codec operation at the NSS, the NSS performs compressed codec operation and sends the code stream to the PCM, and the PCM performs codec operation at the user terminal), thus deteriorating the voice quality more seriously in the conversation.

2. The cost for constructing network is high.

The process of codec conversion consumes numerous calculation resources, and is generally performed through a Digital Signal Processor (DSP), which is costly. Because every call involves codec conversion, plenty of codecs need to be deployed, thus increasing the cost of network construction of the operators.

3. The utilization ratio of bandwidth is low.

The PCM format is an uncompressed voice codec format. Each channel of call voice signals needs to occupy 64 Kbps bandwidth, which is much greater than the bandwidth required for compressed voice codec operation (taking the full-rate GSM voice codec operation supported by most mobile stations as an example, the required bandwidth is only 13 Kbps). Moreover, the TDM circuit bandwidth is occupied exclusively. Even if when the user is silent, idle frames need to be transmitted, thus consuming bandwidth futilely and leading to low utilization ratio of bandwidth in the case of the PCM format.

### SUMMARY

A mobile communication method, a system, and an apparatus based on an A-interface are disclosed in an embodiment of the present invention to improve the conversation quality, reduce the cost of network construction, and improve the utilization ratio of bandwidth.

Such objectives are fulfilled through the following technical solution.

A mobile communication method based on an A-interface is disclosed. The method includes:
establishing an IP bearer channel between a BSS and a core network, where the IP bearer channel passes through an A-interface; and
transmitting data between the BSS and the core network through the IP bearer channel, during which the BSS transmits the received data transparently without performing codec conversion.

A mobile communication system based on an A-interface is disclosed herein. The system includes a BSS and a core network which are communicated through an A-interface, and further includes:
a channel establishment module, adapted to establish an IP-based voice call session bearer channel between the BSS and the core network, where the session bearer channel passes through the A-interface between the BSS and the core network; and
a transmitting module, adapted to encapsulate session data based on the IP protocol and transmit the session data over the session bearer channel through the A-interface.

A mobile communication core network is disclosed herein. The core network includes a Mobile Switching Center Server (MSS) and a Media Gateway (MGW), and further includes:
a channel establishment module, in communication with the MSS, and adapted to establish an IP-based voice call session bearer channel between the BSS and the MGW, where the session bearer channel passes through the A-interface between the BSS and the core network and is adapted to transmit the session data encapsulated through the IP and transmitted through the A-interface.

A BSS is disclosed herein. The BSS includes:
a transmitting module, adapted to: encapsulate the session data based on the IP protocol, and transmit the session data over the session bearer channel through the A-interface, where the session bearer channel is an IP-based voice call session bearer channel between the BSS and the core network and passes through the A-interface between the BSS and the core network.

The embodiments of the present invention make full use of the switching and processing capabilities as well as the IP interface capability of modem core networks, and bring the following benefits:
(i) The BSS under the present invention always sends the received voice signals to the core network directly without perform codec conversion. Moreover, in the case that the codec operation of one user terminal is the same as the codec operation of the other user terminal (in fact, the core network always attempts to negotiate and make the codec operation identical between the two user terminals through signaling at the time of setting up the call), and the core network needs only to convert the voice signals directly, without requiring codec conversion. Therefore, futile codec conversion is avoided, less codec conversion is required, and the voice quality is improved.
(ii) Compared with the prior art in which every call needs to undergo codec conversion twice (or even four times in some scenarios), the embodiments of the present invention do not require the BSS to perform any codec conversion, thus saving codec resources massively and reducing the cost of network construction drastically.
(iii) The BSS under the present invention accesses the core network through an IP interface. The IP interface is a statistical multiplexing interface, and provides a high utilization ratio of bandwidth, without imposing granularity limitation. The bandwidth and the IP packet header overhead required by each voice channel are the same as those required by compressed voice codec operation. While the user is silent, no voice packet needs to be transmitted, no idle frame needs to be filled, and therefore, the utilization ratio of bandwidth is improved massively.

### BRIEF DESCRIPTION OF THE DRAWINGS

FIG. 1 is a flowchart of a mobile communication method according to an embodiment of the present invention;

FIG. 2 shows a structure of a communication system in SoftSwitch architecture according to an embodiment of the present invention;

FIG. 3 shows a control-plane protocol stack of a BSC and an MSS according to an embodiment of the present invention;

FIG. 4 shows a user-plane protocol stack of a BSC and an MGW according to an embodiment of the present invention;

FIG. 5 is a flowchart of negotiating a codec format at the time of setting up a call on an IP-based voice call session bearer channel according to an embodiment of the present invention;

FIG. 6 is a flowchart of establishing an A-interface bearer according to an embodiment of the present invention;

FIG. 7 is a flowchart of transmitting IP address information in a supported mode in an ordinary call process according to an embodiment of the present invention;

FIG. 8 is a flowchart of transmitting IP address information in a transparent mode in an ordinary call process according to an embodiment of the present invention;

FIG. 9 is a flowchart of transmitting IP address information in a supported mode in a handover process according to an embodiment of the present invention;

FIG. 10 is a flowchart of transmitting IP address information in a transparent mode in a handover process according to an embodiment of the present invention;

FIG. 11 is a flowchart of SDP negotiation in an ordinary call process according to an embodiment of the present invention;

FIG. 12 is a flowchart of SDP negotiation in a handover process according to an embodiment of the present invention;

FIG. 13 shows a structure of a mobile communication system based on an A-interface according to an embodiment of the present invention;

FIG. 14 shows a structure of a mobile communication core network according to an embodiment of the present invention;

FIG. 15 shows a structure of a BSS according to an embodiment of the present invention; and

FIG. 16 shows a structure of an MSS according to an embodiment of the present invention.

### DETAILED DESCRIPTION

In order to make the technical solution, objectives and merits of the present invention clearer, the invention is detailed below by reference to accompanying drawings and preferred embodiments.

The basic conception of the present invention is: The NSS is replaced with a core switching network (hereinafter referred to as "core network") that provides IP interface capabilities; an IP bearer channel that passes through the A-interface is established between the BSS and the core network; data is transmitted between the BSS and the core network through the IP bearer channel, and the BSS performs no codec conversion during data transmission. That is, for the data transmitted from the terminal to the core network, the BSS performs no codec operation for the received data, but performs IP encapsulation for the data directly, and then the IP-encapsulated data is transmitted to the core network through the IP bearer channel. For the data transmitted from the core network to the terminal, the BSS performs no codec conversion for the received data, but sends the data to the terminal directly.

In fact, the foregoing solution converts the existing A-interface TDM transmission mode to the IP transmission mode, and enables the A-interface to be IP-based. In this solution, the BSS does not need to perform codec conversion for the data from the terminal, but performs IP encapsulation for the data directly and sends the data to the core network; the core network handles all codec-related matters, and performs the packet switching function. This solution makes full use of the processing capability and the interface capability of the core network, reduces the codec operations, improves the voice quality of calls, cuts down the cost of network construction, saves the transmission bandwidth on the A-interface, and improves the utilization ratio of transmission bandwidth.

Moreover, in order to further reduce the codec conversion operations during the data transmission, the data transmission codec format at both sides of the session may be negotiated before data is transmitted on the IP channel in an attempt to accomplish the same codec format at both sides of the session. If the negotiation succeeds, the same codec format is applied at both sides of the session, and the core network forwards the data received from the BSS transparently without performing any codec conversion. If the negotiation fails, different codec formats are applied between both sides of the session, and a Transcoder (TC) needs to be inserted in the core network for performing conversion between different codec formats and converting the codec format applied at one side of the session to the codec format applied at the other side, thus enabling mutual conversation between two sides of the session where different codec formats are applied.

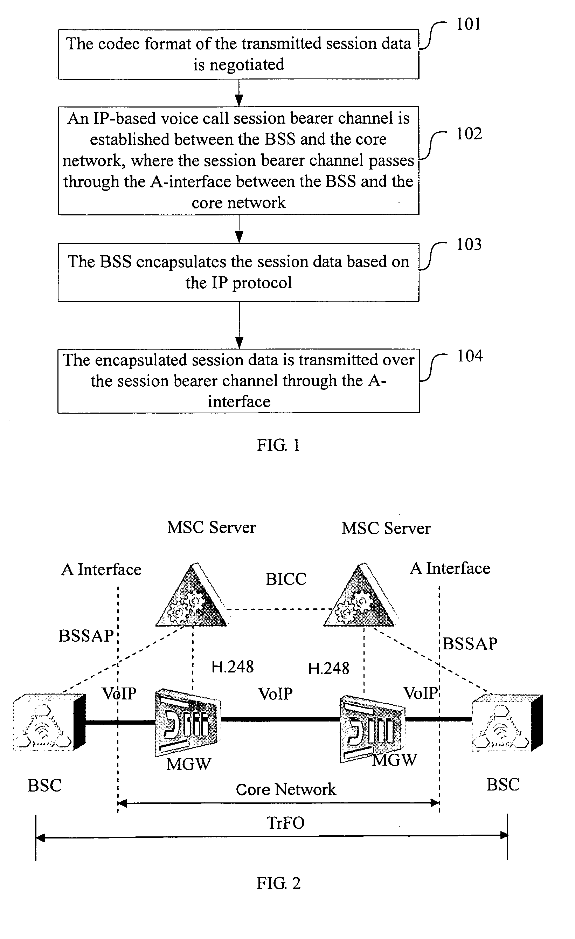

FIG. 1 is a flowchart of a mobile communication method according to an embodiment of the present invention. The method is applied in a GSM network. The GSM network includes a BSS and a core network which are communicated through an A-interface. As shown in FIG. 1, the process of implementing the method includes the following steps:

Step 101: The codec format of the transmitted session data is negotiated. If the codec format is inconsistent between both sides, a TC is inserted into the core network to transcode the transmitted session data; if the codec format is consistent, no TC is required.

Step 102: An IP-based voice call session bearer channel is established between the BSS and the core network, where the session bearer channel passes through the A-interface between the BSS and the core network.

Step 103: The BSS encapsulates the session data based on the IP protocol.

Step 104: The encapsulated session data is transmitted over the session bearer channel through the A-interface.

When an IP-based voice call session bearer channel is established between the BSS and the core network, the A-interface signaling protocol may be Signaling Transport (SIGTRAN), Stream Control Transmission Protocol (SCTP), or Internet Protocol (IP). The SIGTRAN, SCTP, and IP are protocols on different layers in a descending order. The SIGTRAN protocol may be an MTP Level 3 User Adaptation Layer (M3UA) protocol. Alternatively, the A-interface signaling protocol may be Message Transport Part Level 3 (MTP3), Message Transport Part Level 2 (MTP2), or L1 protocol. The MTP3, the MTP2, and the L1 are protocols on different layers in a descending order. The L1 is a TDM timeslot, and specifically may be an E1 protocol, T1 protocol, Synchronous Digital Hierarchy (SDH) protocol, or Synchronous Optical Network (SONET) protocol. The L1 is Layer 1, namely, the physical layer, which is the first layer in the OSI model. The E1 is the first level of the European digital transport system. The T1 is the first level of the North America T carrier system.

When the BSS encapsulates the session data based on the IP protocol and then transmits the session data over the session bearer channel through the A-interface, the A-interface data transmission may be performed through the Real-time Transport Protocol (RTP), the User Datagram Protocol (UDP), or the IP protocol. The RTP, UDP, and IP are protocols on different layers in a descending order.

The signaling for interaction between the core network and the A-interface may be the extended Base Station Subsystem Application Part (BSSAP) signaling.

In another embodiment, the A-interface signaling protocol may be an MTP3 user adaptation protocol.

The technical solution is detailed below, taking the core switching network of the SoftSwitch architecture as an example.

FIG. 2 shows a structure of a communication system in SoftSwitch architecture. As shown in FIG. 2, the communication system is applied to the GSM. The GSM includes a BSS and a core network which are communicated through an A-interface. The core network includes an MSS and an MGW, and the BSS includes a BSC. MSSs interact with each other through a Bearer Independent Call Control (BICC) signaling. The MSS interacts with the BSC through an extended BSSAP (BSSAP+). An A-interface exists between the BSC, MGW, and MSS. The Voice over IP (VoIP) refers to an IP-based voice call session bearer channel.

When an IP-based voice call session bearer channel is established between the BSS and the core network, the MSS may control establishment and cancellation of the A-interface bearer. In the BSS, the BSC may encapsulate the GSM compressed voice to IP packets directly after the A-interface bearer is established, and send the IP packets to the core network. If the MSS makes the codec format consistent between both sides in the process of establishing the bearer, the GSM compressed voice is transmitted in the core network transparently; otherwise, a TC is inserted into the core network to transcode the transmitted session data, for example, a TC is inserted into the MGW of the core network to perform codec conversion. In the implementation, the BSSAP signaling is extended to support the IP bearer.

The user-plane and control-plane protocol stacks of the A-interface may be implemented in the following way, taking the BSC in the BSS as well as the MGW and MSS in the core network as examples. The abbreviations involved in the following two figures except those already clarified above are:
Mobile Application Part (MAP), Signaling Connection Control Point (SCCP), Media Access Control (MAC), and Point-to-Point Protocol (PPP).

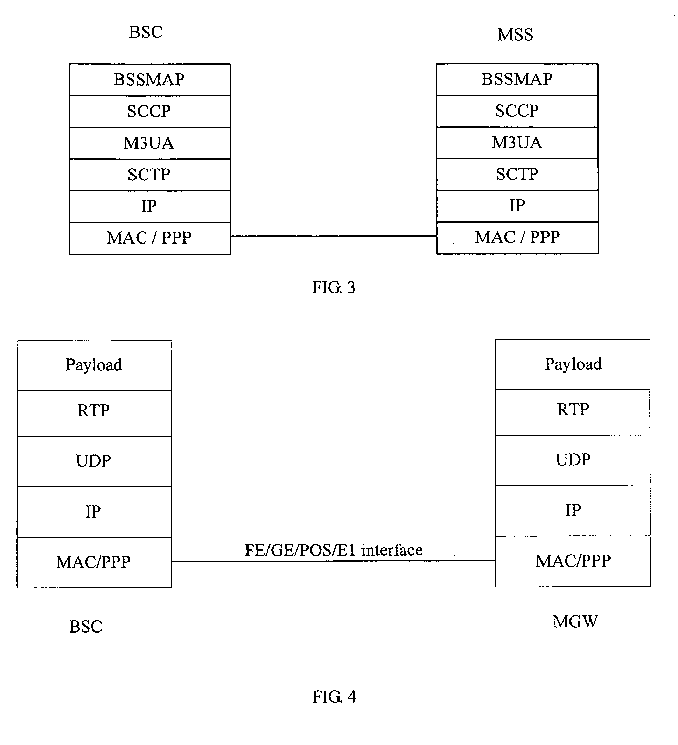

FIG. 3 shows a control-plane protocol stack of a BSC and an MSS. As shown in FIG. 3, because the A-interface is already IP-based, the A-interface signaling protocol is contained over the SIGTRAN or SCTP protocol, and preferably, contained over an M3UA protocol. In the implementation, the SCTP numbered RFC2960 and the M3UA numbered RFC3332 serve as references.

FIG. 4 shows a user-plane protocol stack of a BSC and an MGW. As shown in FIG. 4, on the user plane, the compressed voice codec of the GSM may be contained over the RTP, UDP, or IP directly. The core network handles the issues related to codec interworking. As regards the corresponding protocols, RFC3551 and RFC3527 serve as references.

In another embodiment, the A-interface signaling protocol may be an MTP3 user adaptation protocol.

The process of establishing a call on an IP-based voice call session bearer channel may be performed in the following way.

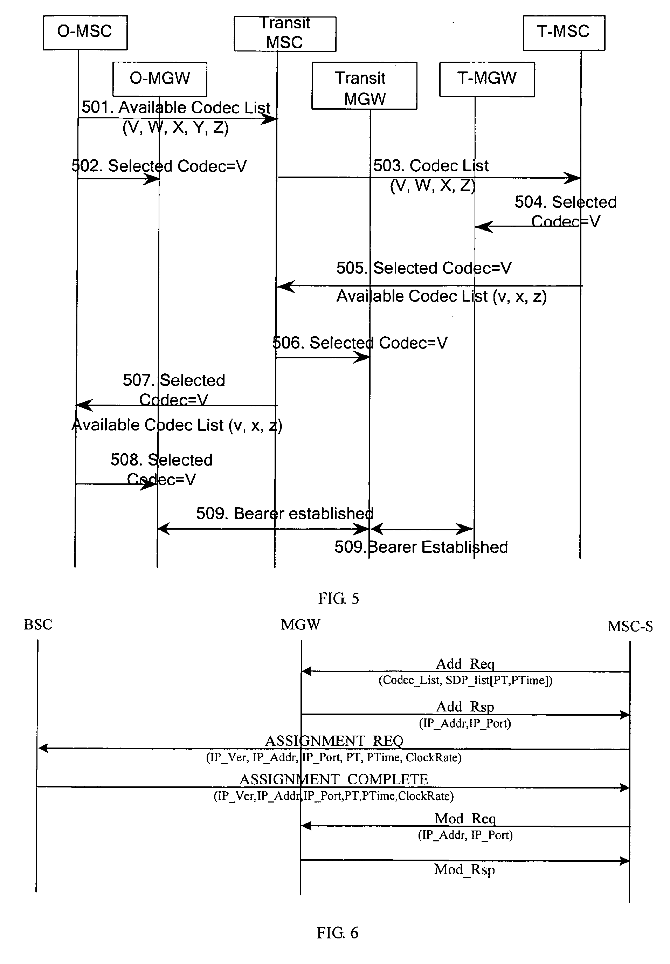

FIG. 5 is a flowchart of negotiating a codec format at the time of establishing a call on an IP-based voice call session bearer channel. As shown in FIG 5, the process includes the following steps:

Step 501: Originate-MSC (O-MSC) sends a list of available codec formats, for example, (v, w, x, y, z), to the Transit-MSC.

Step 502: The O-MSC sends a selected codec format to the Originate-MGW (O-MGW). In this embodiment, the selected codec format is v.

Step 503: The Transit-MSC sends a codec format list, for example, (v, w, x, z), to the Terminate-MSC (T-MSC). In this embodiment, it is assumed that the Transit-MGW does not support codec format y, and the Transit-MSC deletes y.

Step 504: The T-MSC selects the codec format such as v, and feeds it back to the Terminate-MGW (T-MGW).

Step 505: The T-MSC feeds back the selected codec format v to the Transit-MSC.

Step 506: The Transit-MSC feeds back the determined codec format v to the Transit-MGW.

Step 507: The Transit-MSC feeds back the selected codec format v to the O-MSC.

Step 508: The O-MSC feeds back the determined codec format v to the O-MGW.

Step 509: A bearer is established between the O-MGW and the T-MGW according to the codec format v.

In the core network, due to the characteristics of the core network mechanism, the MSS tries to avoid use of a codec. That is, in the call process, the MSS attempts to negotiate the codec format to be the same between both sides of the call. Before establishment of the bearer, the codec negotiation is performed. Therefore, the core network establishes proper bearer resources for the call, and avoids inserting a TC during the call.

In the GSM system, the BSC finally decides the selection of the codec format. The MSS only proposes the BSC to select a certain codec format preferably. Even if the O-MSC and the T-MSC finally select the same codec format (such as v), the call is still not TrFO, if the BSC decides not to comply with the recommendation of the MSC according to conditions of the local channel resources. In this case, everything is appropriate only by inserting a TC onto the MGW.

The A-interface bearer may be established in the following way.

Because the A-interface is already IP-based, no concept of circuits exists on the A-interface, and the call establishment process is no longer a circuit seizure process, but is a process of establishing an IP bearer between the BSC and the MGW. FIG. 6 is a flowchart of establishing an A-interface bearer. As shown in FIG. 6, the MSS obtains the IP address and the port ID of the MGW, and indicates them to the BSC through an extended BSSAP signaling. The recommended codec format list and rate are also indicated, for example, Accepted Codec Set (ACS) list and Selected Codec Set (SCS) list, which correspond to the speech version list. Besides, information required for RTP encapsulation may also be indicated, for example, PayloadType, Packet Time, and Clock Rate. After obtaining the IP address and the port ID of the BSC, the MSS indicates them to the MGW through an Mc interface, thus finishing establishment of a bearer.

The user-plane processing is as follows.

After the A-interface bearer is established, compressed GSM voice can be sent between the MGW and the BSC. The BSC does not need to convert codec formats. At the core network, if the codec format is consistent between both sides of the call, the GSM voice is forwarded transparently; otherwise, the MGW inserts a TC automatically to convert the codec format.

Therefore, through the IP-based GSM network architecture provided herein, the GSM is composed of an access network and a core network, and the core network may perform voice channel switching between the users who use the same voice codec format or different voice codec formats. If the voice codec format is the same, the core network performs voice channel switching directly. If the voice codec format is different, the core network converts the codec format to the codec format of the opposite party and then performs voice channel switching, thus enabling the conversation between the users all the time. The GSM access network sends the voice signals sent from the user terminal to the core network for switching without conversion. In the reverse direction, the voice signals are sent to the user terminal without conversion. The GSM access network never performs codec conversion, and the voice signals between the GSM access network and the core switching network are contained through an IP protocol.

In the GSM network practice, the GSM A-interface protocol is applied. Such a protocol is extended to support the IP payload type.

In the GSM network practice, the core network always negotiates the codec format between the parties to the call through signaling interaction. If the codec format is negotiated successfully, the same codec format is applied at all the parties to the call.

In the GSM network practice, the voice signal between the GSM access network and the core network may be contained over the IP protocol in the form of RTP/UDP. The signaling messages between the GSM access network and the core network may be contained over the SIGTRAN, SCTP, or IP protocol; or over the MTP3, MTP2, or L1 protocol (L1 is a TDM timeslot, and specifically, an E1, T1, SDH, or SONET protocol).

In the foregoing embodiment, the BSS performs IP encapsulation for the compressed voice directly, and transmits the IP packets to the core network. The core network handles all codec-related matters, including codec negotiation and the codec conversion after failure of the codec negotiation, and performs voice packet switching. Such a solution makes full use of the existing features of the core network. In the case that the codec format can be negotiated to be consistent, Transcode Free Operation (TrFO) is supported, thus enhancing the voice quality, saving TC resources, saving the transmission bandwidth on the A-interface, and simplifying the BSS design.

In the process of establishing an A-interface in FIG. 6, the BSS and the MGW need to obtain the IP address of the opposite party, and need to perform the Session Description Protocol (SDP) negotiation. The contents of SDP negotiation include: payload type (PT), packet time, and clock rate.

The transmission of the IP address information and the SDP negotiation between the BSS and the MGW may be performed through a mobile switching center. In a 2G communication system, the mobile switching center is MSC. In a 3G communication system, the mobile switching center is MSCe or MSS. The IP address information may be an IP address plus a UDP port ID, or an IP address plus a Circuit Identity Code (CIC).

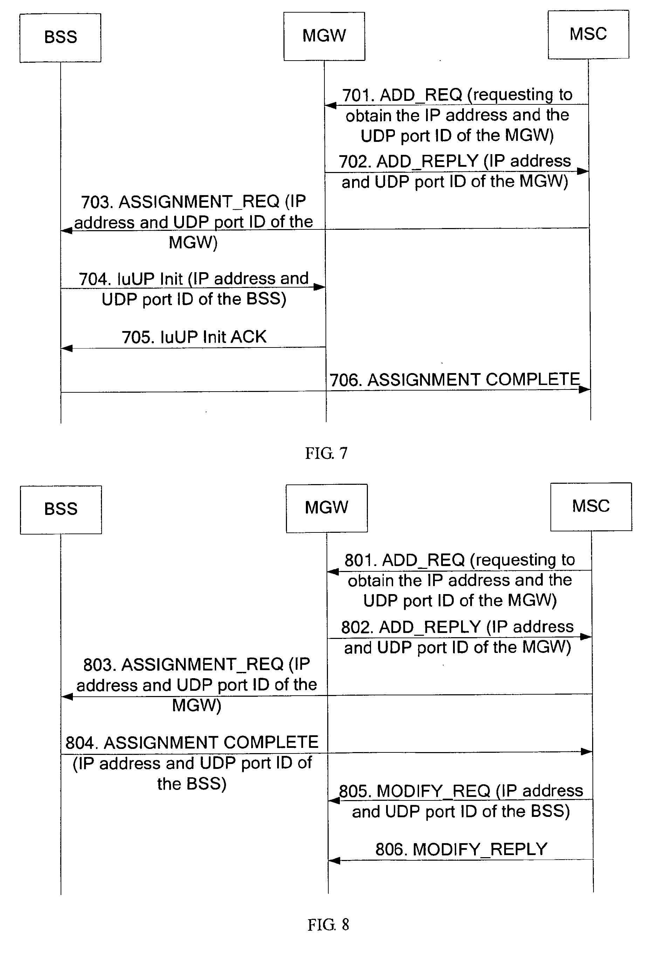

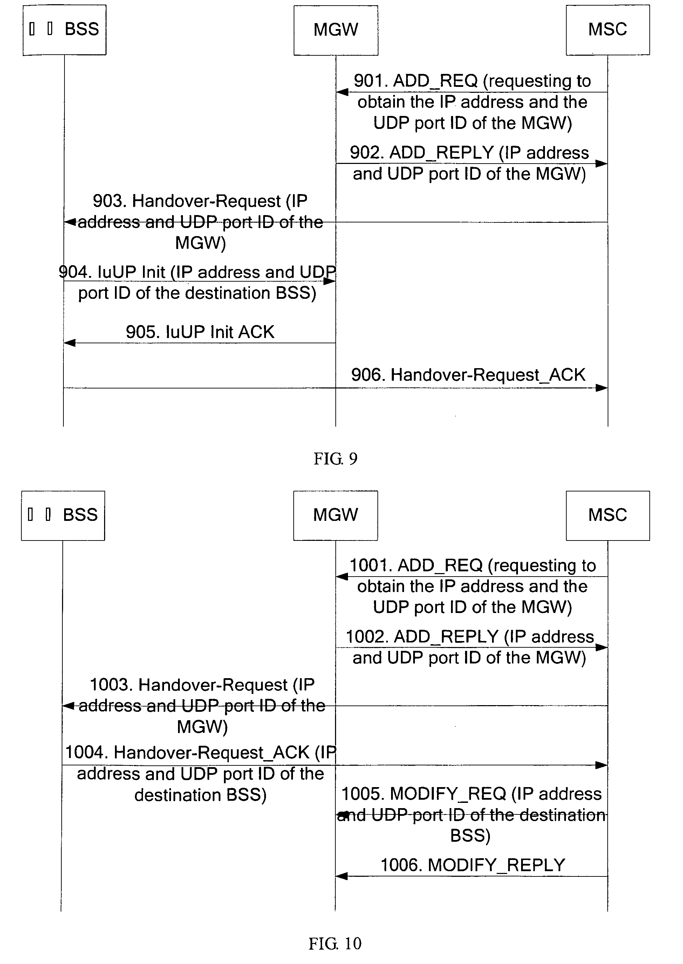

The process of transmitting IP address information is detailed below. Figures 7-10 show processes of transmitting IP address information between the BSS and the MGW through an MSC in different user-plane modes in the ordinary call process and the handover process. FIG. 7 corresponds to the ordinary call process and the supported mode. FIG. 8 corresponds to the ordinary call process and the transparent mode. FIG. 9 corresponds to the handover process and the supported mode. FIG. 10 corresponds to the handover process and the transparent mode.

The process of transmitting IP address information in FIG. 7 includes the following steps:

Step 701: Through an ADD_REQ (endpoint establishment request message), the MSC sends a request to the MGW, requesting to obtain the IP address and the UDP port ID of the MGW.

Step 702: After receiving the ADD_REQ message from the MSC, the MGW returns an ADD_REPLY (endpoint establishment response message) to the MSC. The ADD_REPLY message contains the IP address and the UDP port ID of the MGW.

Step 703: Through an ASSIGNMENT_REQ (assignment request message), the MSC sends the received IP address and UDP port ID of the MGW to the BSS.

Step 704: After receiving the ASSIGNMENT_REQ message, the BSS sends its own IP address and UDP port ID to the MGW through an IuUP Init (UP initialization message). The IuUP is an Iu interface user-plane protocol of the 3GPP.

Step 705: After receiving the IuUP Init message, the MGW returns an IuUP Init ACK (UP initialization response message) to the BSS.

Step 706: The BSS returns an ASSIGNMENT COMPLETE (assignment completion message) to the MSC, and may choose whether to let the message contain the BSS's IP address and UDP port ID or not.

The process of transmitting IP address information in FIG. 8 includes the following steps:

Steps 801-803: These steps are the same as steps 701-703, and are not repeated here any further.

Step 804: After receiving the ASSIGNMENT_REQ message, the BSS returns an ASSIGNMENT COMPLETE message to the MSC. The ASSIGNMENT COMPLETE message contains the IP address and the UDP port ID of the BSS.

Step 805: Through an MODIFY_REQ (endpoint attribute modification request message), the MSC sends the received IP address and UDP port ID to the MGW.

Step 806: After receiving the MODIFY_REQ message, the MGW returns a MODIFY_REPLY (endpoint attribute modification response message) to the MSC.

The process of transmitting IP address information in FIG. 9 includes the following steps:

Steps 901-902: These steps are the same as steps 701-702, and are not repeated here any further.

Step 903: Through a Handover-Request (handover request message), the MSC sends the IP address and the UDP port ID of the MGW to the destination BSS.

Step 904: Through an IuUP Init message, the destination BSS sends its own IP address and UDP port ID to the MGW.

Step 905: After receiving the IuUP Init message, the MGW returns an IuUP Init ACK message to the destination BSS.

Step 906: The destination BSS returns a Handover-Request_ACK (handover request response message) to the MSC, and may choose whether to let the message contain the BSS's IP address and UDP port ID or not.

The process of transmitting IP address information in FIG. 10 includes the following steps:

Steps 1001-1003: These steps are the same as steps 901-903, and are not repeated here any further.

Step 1004: After receiving the Handover-Request message, the destination BSS returns a Handover-Request_ACK message to the MSC. The Handover-Request_ACK message contains the IP address and the UDP port ID of the destination BSS.

Step 1005: Through a MODIFY_REQ message, the MSC sends the IP address and the UDP port ID of the destination BSS to the MGW.

Step 1006: After receiving the MODIFY_REQ message, the MGW returns a MODIFY_REPLY message to the MSC.

For the purpose of making the ASSIGNMENT_REQ, ASSIGNMENT COMPLETE, Handover-Request, and Handover-Request_ACK messages contain the IP address and the UDP port ID, a new element may be added in such messages, for example, a "Transport Layer Address" element is added in such messages; or the CIC element in the messages is extended.

For example, the existing 2-byte CIC element is extended to a length of 16 bytes, and a field for containing the IP address and the UDP port ID is added in the CIC element. In order to make the extended CIC element support transmission of the IP address and the UDP port ID and support transmission of the CIC, another field may be added in the CIC element to indicate whether the transmitted content is CIC or "IP address + UDP port ID". Table 1 shows the format of an extended CIC element.

**Table 1**

| | | | | | | | | |
|---|---|---|---|---|---|---|---|---|
| 8 | 7 | 6 | 5 | 4 | 3 | 2 | 1 | |
| Element identifier | | | | | | | | octet 1 |
| Length | | | | | | | | octet 2 |
| Spare | | | | | | | IP/TDM | octet 3 |
| IP | | | | | | | | octet 4 |
| IP | | | | | | | | octet 5 |
| ··· | | | | | | | | ... |
| IP | | | | | | | | octet 17 |
| PORT | | | | | | | | octet 18 |
| PORT | | | | | | | | octet 19 |

The first row is bits. Octet 1 represents the element identifier, and octet 2 represents length. The first bit of octet 3 indicates whether the subsequent octet is CIC or "IP address + port ID". The CIC corresponds to the TDM transmission mode, and the "IP+port" corresponds to the IP transmission mode.

In order to enable the extended CIC element to support transmission of both "IP+port" and CIC, bit 1 of octet 3 may be set as follows:
if bit 1 of octet 3 = 0, octet 4 and octet 5 represent CIC;
if bit 1 of octet 3 = 1, octet 4 - octet 17 represent the IP address, and octet 18 - octet 19 represent the port ID.

Described above is a detailed process of transmitting the IP address and the UDP port ID. In practice, IP address and CIC may be used in place of the IP address and the UDP port ID based on the present invention. In this way, the existing CIC concept of the BSC and the MGW may be inherited to maintain the A-interface.

The SDP negotiation process is detailed below.

In an embodiment of the present invention, a "Speech SDP Information list" element is added on the basis of the ASSIGNMENT REQUEST, ASSIGNMENT COMPLETE, HANDOVER REQUEST, and HANDOVER REQUEST ACK message structure of the A-interface BSSAP signaling. The relevant standards specify the existing structure of the ASSIGNMENT REQUEST, ASSIGNMENT COMPLETE, HANDOVER REQUEST, and HANDOVER REQUEST ACK messages.

Table 2 specifies a structure of a "Speech SDP Information list" element according to an embodiment of the present invention.

**Table 2**

| | | | | | | | | |
|---|---|---|---|---|---|---|---|---|
| 8 | 7 | 6 | 5 | 4 | 3 | 2 | 1 | |
| Element identifier | | | | | | | | Octet 1 |
| Length | | | | | | | | Octet 2 |
| Number of PT | | | | | | | | Octet 3 |
| Ext =0 | Payload Type | | | | | | | octet 4 |
| Clock rate | | | | | | | | octet 4a |
| Packet time | | | | | | | | octet 4b |
| ACS/Config-WB | | | | | | | | octet 4c |
| SCS | | | | | | | | octet 4d |
| Spare | | | | OM | MACS | | | octet 4e |
| Ext =1 | Payload Type(red) | | | | | | | Octet 5 |
| Ext | PT | | | | | | | Octet 5a |
| Ext | PT | | | | | | | Octet 5b |
| Ext | PT | | | | | | | Octet 5c |
| 1 | ...... | | | | | | | Octet 5d |
| Clock rate(red) | | | | | | | | Octet 5e |
| Packet time(red) | | | | | | | | Octet 5f |

The first row is bits, the first byte (octet 1) is an element identifier, and the second byte (octet 2) represents the element length.

Octet 3 represents the quantity of Payload Types (PTs). A PT identifies the codec type applied on the bearer channel. Table 3 shows corresponding relation between the PT value and the codec type.

As shown in Table 2, a bit in octet 4 identifies the value of Ext. When the value of Ext is 0, it indicates that the PT indicated in octet 4 does not support Redundant (Red). When the value of Ext is 1, it indicates that the PT indicated in octet 4 supports Redundant (Red), where "Red" refers to RFC2198 redundant RTP packets.

As shown in Table 2, the value of Ext at the first bit of octet 4 in Table 2 is 0, indicating that the PT indicated in octet 4 does not support Redundant (Red). Besides, the value of octet 5 in Table 2 is 1, indicating that the PT indicated in octet 5 supports Redundant (Red). Therefore, the information contained in the "Speech SDP Information list" element in Table 2 indicates that: The codec types applied on the bearer channel established through the element structure include both the codec type supporting RFC2198 redundant transmission and the codec type not supporting RFC2198 redundant transmission.

The value of PT indicates the codec type of the service to be provided by the BSC. Table 3 shows corresponding relation between some PT values and the codec type.

**Table 3**

| Static PT | Encoding name | Media type | Clock rate(Hz) | Dynamic PT | Encoding name | Media type | Clock rate(Hz) |
|---|---|---|---|---|---|---|---|
| 0 | PCMU | A | 8,000 | dyn | G726-40 | A | 8,000 |
| 1 | reserved | A | | dyn | G726-32 | A | 8,000 |
| 2 | reserved | A | | dyn | G726-24 | A | 8,000 |
| 3 | GSM | A | 8,000 | dyn | G726-16 | A | 8,000 |
| 4 | G723 | A | 8,000 | dyn | G729D | A | 8,000 |
| 5 | DVI4 | A | 8,000 | dyn | G729E | A | 8,000 |
| 6 | DVI4 | A | 16,000 | dyn | GSM-EFR | A | 8,000 |
| 7 | LPC | A | 8,000 | dyn | GSM-HR | A | 8,000 |
| 8 | PCMA | A | 8,000 | dyn | AMR (including HR AMR, FR AMR, UMTS AMR, UMTS AMR2) | A | 8,000 |
| 9 | G722 | A | 8,000 | dyn | AMR WB (including OFR AMR-WB, OHR AMR-WB, FR AMR-WB) | A | 16,00 0 |
| 10 | L16 | A | 44,100 | dyn | L8 | A | var. |
| 11 | L16 | A | 44,100 | dyn | RED | A | |
| 12 | QCELP | A | 8,000 | dyn | DATA | D | |
| 13 | CN | A | 8,000 | dyn | VDVI | A | var. |
| 14 | MPA | A | 90,000 | | | | |
| 15 | G728 | A | 8,000 | | | | |
| 16 | DVI4 | A | 11,025 | | | | |
| 17 | DVI4 | A | 22,050 | | | | |
| 18 | G729 | A | 8,000 | | | | |

By reference to Table 2, the PT value occupies 7 bits, and therefore, the value range of PT is 0-127. In the prior art, each PT value in the 0-95 value range already defines the corresponding codec type, namely, static PT. For example, as shown in Table 3, if the PT value is 3, it indicates that the GSM coding is applied and the clock rate of GSM coding is 8000 Hz. Within the PT value range 96-127, the PT values are allocated dynamically. That is, before bearing the service, the system temporarily negotiates a value in 96-127 for identifying the codec type not defined in the static PT.

By reference to Table 3, in a mobile communication system where the present invention is applied, the PT values of the involved GSM Enhanced Full Rate (GSM-EFR) coding, GSM Half Rate (GSM-HR) coding, Adaptive Multi Rate (AMR) coding, AMR-WB, data service (DATA), and RFC 2198 redundant RTP packet (Red) are assigned dynamically.

The basic conception of the RFC2198 redundant transmission is: The data of the same content is encoded in different coding modes, and encapsulated as two packets for transmitting. In order to improve the robustness against IP packet loss in the data service and improve the put-through ratio of the data service, the 2198 coding mode is applied. In the packet of the current data, the data of the preceding one or more frames is sent redundantly.

The MSS decides whether to enable this function. The server specifies the type as "DATA" through the "Calltype" in the Localcontrol descriptor of the ADD or MOD command. In the Local description, the SDP information is delivered to indicate the redundant parameter:
m=audio 1234 RTP/AVP 97 96
a=rtpmap:96 PCMA/8000
a=rtpmap:97 red/8000/1
a=fmtp:97 96/96

The server needs to deliver the relevant redundant parameters to the BSC through the BSSAP message to ensure parameter consistency between the BSC and the MGW. The SDP message of the BSC is described below.

If the coding type applied on the bearer channel supports the RFC2198 redundant transmission, the Speech SDP Information list needs to contain the RTP Payload parameter in the SDP negotiation process. In such fields, the indicated information includes at least: PT value indicative of RTP Red, PT value indicative of the two types of coding types applied in the redundant transmission, and the clock rate applied to Red.

Give below is an example of the RTP Red parameter, where "97" is the PT value which is assigned dynamically and corresponds to the RTP Red, "96" is the PT value applied in the redundant transmission, and "a=fmtp:97 96/96" indicates that one frame is redundant. As judged by reference to Table 3, the redundant transmission in this example adopts the PCMU coding mode. "8000" represents the clock rate.
m=audio 1234 RTP/AVP 97 96
a=rtpmap:96 PCMA/8000
a=rtpmap:97 red/8000/1
a=fmtp:97 96/96

By reference to the structure of the "Speech SDP Information list" element in Table 2:
For voice services, the PT value in Table 2 corresponds to the speech version in the Channel Type cell contained in the ASSIGNMENT REQUEST message and the HANDOVER REQUEST message in the prior art. For different AMR and AMR-WB, it is possible that one PT value corresponds to multiple codec types.
For data services, because there are only one data service PT and only one 2198 redundant PT, the value of PT does not correspond to the speech version in the Channel Type element.

In the prior art, the speech version mentioned above is adapted to transmit the voice codec type. Therefore, for voice services, in the case that the structure of the Speech SDP Information list in Table 2 is the same as the structure sequence of the Channel Type in the prior art, the Speech SDP Information list does not need to include all information of the speech version in the prior art. The system may use the speech version together with the PT of the Speech SDP Information list.

By reference to the structure of the "Speech SDP Information list" element in Table 2:
Octet 4c identifies Active Codec Set (ACS), octet 4d identifies the Supported Codec Set (SCS), and octet 4e indicates whether to allow the opposite party to optimize the ACS (Optimization Mode for ACS) and the Maximal number of codec modes in the ACS (MACS).
HR, EFR, and FR are single-rate coding types. Therefore, for octet 4c, octet 4d, and octet 4e, the Speech SDP Information list does not include the content of octet 4c, octet 4d, or octet 4e in Table 2 when the coding type is HR, EFR, or FR.

For the coding types FR AMR and HR AMR, the contents of octet 4c, octet 4d, and octet 4e in Table 2 are optional. When the Speech SDP Information list does not contain such contents, support of such coding types is indicated; otherwise, the structure in Table 4 applies in identifying whether such coding types are supported.

**Table 4**

| **Octet** | **Parameter** | **MSB 8** | **7** | **6** | **5** | **4** | **3** | **2** | **1 LSB** |
|---|---|---|---|---|---|---|---|---|---|
| **4c** | ACS | 12.2 | 10.2 | 7.95 | 7.40 | 6.70 | 5.90 | 5.15 | 4.75 |
| **4d** | SCS | 12.2 | 10.2 | 7.95 | 7.40 | 6.70 | 5.90 | 5.15 | 4.75 |
| **4e** | OM, MACS | (spare) | (spare) | (spare) | (spare) | OM | MACS | | |

According to Table 4, it is evident that bits 1-8 of octet 4c and octet 4d correspond to different coding rates. If such a coding rate is supported, the corresponding bit of the octet 4c byte or the octet 4d byte is set to 1; otherwise, the bit is set to 0. Four bits are reserved in the octet 4e. 1 bit is used for identifying the OM, and 3 bits are used for indicating the MACS value.

For the AMR WB coding type, the Speech SDP Information list needs to contain octet 4c shown in Table 2.

The existing standards already stipulate the octet 4c, octet 4d, and octet 4e fields shown in Table 2, and such fields are not described here any further.

As shown in Table 2, octet 5e indicates the clock rate. The corresponding relations between the value of the "clock rate" field and the clock rate (unit: Hz) are set out below.
0000 0000:8000hz
0000 0010:16000hz
0000 0011: reserved
......
1111 1111: invalid

As shown in Table 2, octet 5f indicates the packet time. The corresponding relations between the value of the "packet time" field and the packet time (unit: ms) are set out below:
0000 0000:5ms
0000 0010:10ms
0000 0011:20ms
0000 0100:30ms
0000 0101:40ms
0000 0110:reserved
......
1111 1111: invalid

The structure of the "Speech SDP Information list" element is described above through an embodiment.

According to the foregoing embodiment, it is evident that the IP header multiplexing/compressing technology and the 2198 redundant transmission technology are added into the negotiated SDP content. In this way, more reliable transmission technologies such as 2198 redundancy transmission may be applied between the MGW and the BSC, thus enhancing the transmission reliability of the A-interface between the MGW and the BSC and reducing the packet loss ratio of IP packets.

The structure of a "Speech SDP Information list" element according to an embodiment of the present invention is elaborated above.

The SDP negotiation process is detailed below.

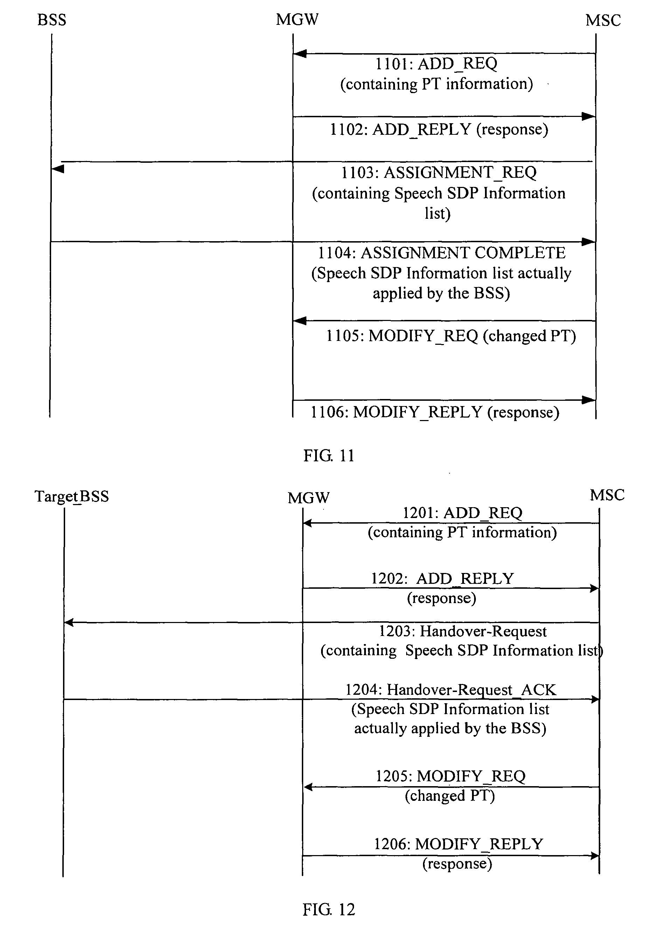

FIG. 11 is a message flowchart of SDP negotiation in an ordinary call process according to an embodiment of the present invention. As shown in FIG. 2, the process includes the following steps:

Step 1101: When the MSC sends an ADD_REQ message to the MGW to establish an endpoint at the access side, the message contains PT information which indicates the PT information in the RTP packet of the BSC.

Step 1102: The MSC receives a bearer establishment response "ADD_REPLY" from the MGW.

Step 1103: The MSC delivers the ASSIGNMENT_REQ message to the BSS, and the message contains a Speech SDP Information list which includes the PT information.

Step 1104: The MSC returns an ASSIGNMENT COMPLETE message to the MSC, and the message contains the actually applied Speech SDP Information list which includes the actually applied PT information.

Step 1105: Depending on Speech SDP Information list returned by the BSS, if the MSC determines that the PT preferred by the BSS has changed, the MODIFY_REQ message sent by the MSC to the MGW contains the changed PT, thus notifying the MGW of the PT change.

Step 1106: The MGW returns a MODIFY_REPLY response message.

The message flows shown in FIG 11 and FIG. 8 may be processed together. That is, in the message interaction process shown in FIG. 8 or FIG. 11, the IP address information is transmitted and the SDP negotiation is performed at the same time. For example, through an ASSIGNMENT_REQ message, the MSC sends the IP address and the UDP port of the MGW as well as the Speech SDP Information list to the BSS; through an ASSIGNMENT COMPLETE message, the BSS sends the IP address and the UDP port ID of the BSS as well as the actually applied Speech SDP Information list to the MSC; through a MODIFY_REQ message, the MSC sends the IP address and the UDP port ID of the BSS as well as the changed PT information to the MGW.

In the foregoing method, the PT information is exchanged between the BSS and the MGW through SDP negotiation. By reference to the structure of the "Speech SDP Information list" element provided above, the redundancy information may also be negotiated between the BSS and the MGW by making the Speech SDP Information list contain the redundancy information stipulated by the protocol in this embodiment.

A method for negotiating redundant transmission information between a BSS and an MGW in a message flow of transmitting SDP during an ordinary call process is provided in an embodiment of the present invention. The method includes:
containing, by an ADD REQ message, redundancy information stipulated by a protocol (for example, 2198 redundant information stipulated by the protocol) when the MSC sends the ADD REQ message to the MGW to establish an endpoint at the access side, where the redundancy information indicates the redundancy mode applied by the MGW;
receiving, by the MSC, a bearer establishment response "ADD REPLY" from the MGW; and
delivering the ASSIGNMENT REQ message to the BSS, where the message contains a Speech SDP Information list which indicates the redundancy information stipulated by the protocol.

Through the foregoing method, the redundant transmission information is negotiated in an ordinary call process.

FIG. 12 is a message flowchart of SDP negotiation in a handover process according to an embodiment of the present invention. The flow includes the following steps:

Step 1201: When the MSC sends an ADD_REQ message to the MGW to establish an endpoint at the access side, the message contains PT information which indicates the PT information in the RTP packet of the BSC.

Step 1202: The MSC receives a bearer establishment response "ADD_REPLY" from the MGW.

Step 1203: The MSC delivers the Handover-Request message to the BSS, and the message contains a Speech SDP Information list which includes the PT information.

Step 1204: The MSC returns a Handover-Request_ACK message to the MSC, and the message contains the actually applied Speech SDP Information list which includes the actually applied PT information.

Step 1205: Depending on Speech SDP Information list returned by the BSS, if the MSC determines that the PT preferred by the BSS has changed, the MODIFY_REQ message sent by the MSC to the MGW contains the changed PT, thus notifying the MGW of the PT change.

Step 1206: The MGW returns a MODIFY_REPLY response message.

It should be noted that, the message flows shown in FIG. 12 and FIG. 10 may be processed together. That is, in the message interaction process shown in FIG. 10 or FIG. 12, the IP address information is transmitted and the SDP negotiation is performed at the same time. For example, through a Handover-Request message, the MSC sends the IP address and the UDP port of the MGW as well as the Speech SDP Information list to the BSS; through a Handover-Request_ACK message, the BSS sends the IP address and the UDP port ID of the BSS as well as the actually applied Speech SDP Information list to the MSC; through a MODIFY_REQ message, the MSC sends the IP address and the UDP port ID of the BSS as well as the changed PT information to the MGW.

By reference to the structure of the "Speech SDP Information list" element provided above, the redundant transmission information may also be negotiated between the BSS and the MGW by making the Speech SDP Information list contain the redundancy information stipulated by the protocol in this embodiment.

A method for negotiating redundant transmission information between a BSS and an MGW in another embodiment of the present invention includes:
the MSC sends an ADD REQ message to the MGW to establish an endpoint at the access side, wherein the ADD REQ message contains redundancy information stipulated by a protocol (for example, 2198 redundant information stipulated by the protocol) and the redundancy information indicates the redundancy mode applied by the MGW;
the MSC receives a bearer establishment response from the MGW; and
the MSC delivers the HANDOVER REQUEST message to the BSS, wherein the message contains a Speech SDP Information list which indicates the redundancy information stipulated by the protocol.

Through the foregoing method, the redundant transmission information is negotiated in a handover process.

In the foregoing embodiment, the MSC is responsible for SDP negotiation between the MGW and the BSC. Through the negotiation, the A-interface supports IP payload. Therefore, voice coding conversion involved in the prior art is avoided in the present invention, the voice quality is improved, TC resources are saved, and the system cost is reduced. Moreover, the IP header multiplexing/compression technology and the 2198 redundancy transmission technology are added to the negotiation contents according to an embodiment of the present invention, thus improving the robustness of data transmission between the MGW and the BSC.

It is understandable to those skilled in the art that, all or part of the steps of the foregoing embodiments may be implemented by hardware instructed by a program. The program may be stored in a computer-readable storage medium. When being executed, the program performs these steps:
the MSC sends a bearer establishment request message to the MGW, where the message contains PT information;
the MSC obtains the bearer establishment response message from the MGW;
the MSC sends voice/data codec SDP information to the BSC, where the SDP information contains the PT information;
the MSC obtains the actually applied voice/data codec SDP information returned by the BSC; and
if determining that the PT information contained in the returned SDP information is different from the PT information contained in the SDP information sent by the MSC to the BSC, the MSC sends the changed PT information to the MGW.

The storage medium may be a Read-Only Memory (ROM), a magnetic disk, or a compact disk.

Corresponding to the A-interface based mobile communication method disclosed herein, an A-interface based mobile communication system is disclosed in an embodiment of the present invention, as described below.

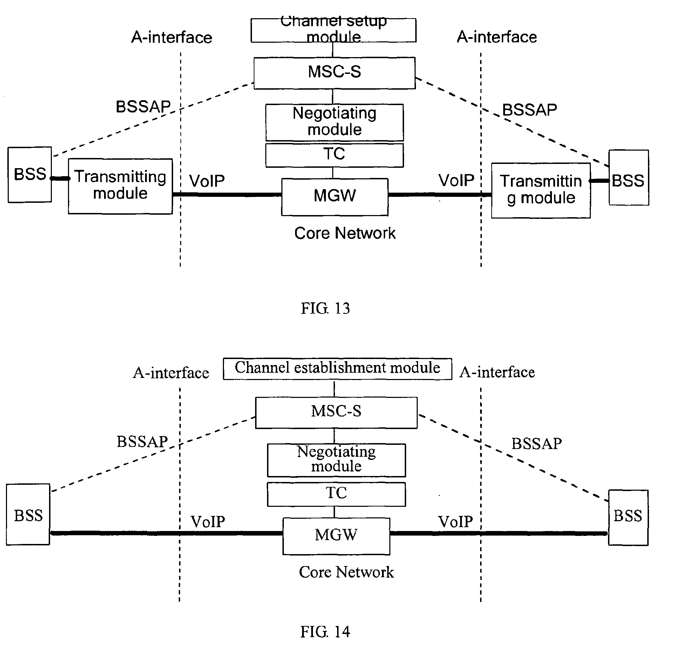

FIG. 13 shows an exemplary structure of a mobile communication system. The system is applicable to the GSM, and includes a BSS and a core network which are communicated through an A-interface, and further includes:
a channel establishment module, adapted to establish an IP-based voice call session bearer channel between the BSS and the core network, where the session bearer channel passes through the A-interface between the BSS and the core network; and
a transmitting module, adapted to encapsulate session data based on the IP protocol and transmit the session data over the session bearer channel through the A-interface.

In a preferred embodiment, the system may further include:
a TC, adapted to perform codec conversion for the transmitted session data; and
a negotiating module, adapted to: negotiate the codec format of the transmitted session data before the IP-based voice call session bearer channel is established between the BSS and the core network, and insert a TC into the core network to transcode the transmitted session data if the codec format is inconsistent between the BSS and the core network.

In practice, when the IP-based voice call session bearer channel is established between the BSS and the core network, the A-interface signaling protocol may be a SIGTRAN, SCTP, or IP protocol, and the SIGTRAN protocol may be an M3UA protocol.

When the BSS encapsulates session data based on the IP protocol and transmits the session data over the session bearer channel through the A-interface, the A-interface may be based on the RTP, UDP, or IP protocol.

In another embodiment, the A-interface signaling protocol may be the MTP3 protocol.

The signaling for interaction between the core network and the A-interface may be the extended BSSAP signaling.

Accordingly, a mobile communication core network is disclosed in an embodiment of the present invention, as detailed below.

FIG. 14 shows an exemplary structure of a mobile communication core network. As shown in FIG 14, the mobile communication core network is applicable to the GSM network. The GSM network includes a BSS and a core network which are communicated through an A-interface. The core network includes: an MSS, an MGW, and further includes:
a channel establishment module, in communication with the MSS, and adapted to establish an IP-based voice call session bearer channel between the BSS and the MGW, where the session bearer channel passes through the A-interface between the BSS and the core network, and is adapted to transmit the session data encapsulated through the IP and transmitted through the A-interface.

In a preferred embodiment, the system may further include:
a TC, in communication with the MGW, and adapted to perform codec conversion for the transmitted session data; and
a negotiating module, in communication with the MSS, and adapted to: negotiate the codec format of the transmitted session data before the IP-based voice call session bearer channel is establish between the BSS and the core network, and insert a TC to transcode the transmitted session data if the codec format is inconsistent between the BSS and the core network.

Besides, a BSS is disclosed in an embodiment of the present invention, as detailed below.

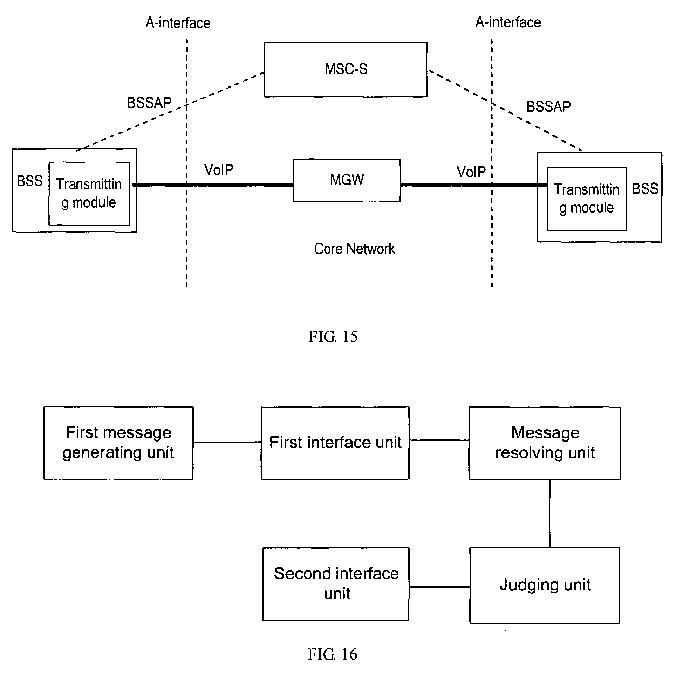

FIG. 15 shows an exemplary structure of a BSS. The BSS is applicable to the GSM network. The GSM network includes a BSS and a core network which are communicated through an A-interface. The BSS includes:
a transmitting module, adapted to encapsulate the session data based on the IP protocol, and transmit the session data over the session bearer channel through the A-interface, where the session bearer channel is an IP-based voice call session bearer channel between the BSS and the core network and passes through the A-interface between the BSS and the core network.

The MSS in FIG. 13, FIG. 14, and FIG. 15 is further adapted to obtain the IP address information of the MGW in the process of establishing the IP bearer channel, and send the obtained IP address information to the BSS. After receiving the IP address information of the MGW, the BSS sends its own IP address information to the MGW directly, or sends its own IP address information to the MSC first and then the MSC forwards the IP address information of the BSS to the MGW.

The MSS in FIG. 13, FIG. 14, and FIG. 15 is further adapted to:
send PT information to the MGW in the process of establishing an IP bearer channel, and send the voice/data codec SDP information containing the PT information to the BSS;
receive the actually applied voice/data codec SDP information returned by the BSS, and then judge whether the preferred PT contained in the voice/data codec SDP information actually applied by the BSS is consistent with the PT sent by the MSC to the BSS; and
send the changed PT information to the MGW if the PT is inconsistent.

FIG. 16 shows an exemplary structure of an MSS. The MSS may include:
a first message generating unit, adapted to generate a first message, where the first message contains the voice/data codec SDP information and is an assignment request message or a handover request message;
a first interface unit, adapted to perform information interaction with the BSC, including: send a first message to the BSC and obtain the first response that contains the actually applied voice/data codec SDP information returned by the BSC, where the first message is an assignment request message or a handover request message;
a message resolving unit, adapted to resolve the first response, and obtain the voice/data codec SDP information contained in the first response;
a judging unit, adapted to: judge whether the PT information in the voice/data codec SDP information obtained through the resolution is consistent with the PT in the voice data codec SDP information sent to the BSC through the first message; and, if the PT information is inconsistent, trigger the second interface unit to send the changed PT information to the MGW through a modification request message; and
a second interface unit, adapted to perform information interaction with the MGW, including: send the PT information to the MGW through a bearer establishment request message and a modification request message.

On the basis of the foregoing embodiment, the voice/data codec SDP information further indicates whether RFC2198 redundancy transmission is supported corresponding to the PT.

The assignment request message and the handover request message in the prior art include the Channel Type information. Therefore, the composition sequence of the voice/data codec SDP information in this embodiment corresponds to the composition sequence of the Channel Type information, and the voice/data codec SDP information does not contain the Speech Version information contained in the Channel Type information.

Alternatively, the voice/data codec SDP information in this embodiment further contains the Speech Version information contained in the Channel Type information.

Elaborated above are the objectives, technical solution and benefits of preferred embodiments of the present invention. Although the invention has been described through some exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the following claims or their equivalents.

## Claims

1. A mobile communication method based on an A-interface, **characterized by** comprising:
establishing an Internet Protocol, IP, bearer channel between a Base Station Subsystem, BSS, and a core network, wherein the IP bearer channel passes through the A-interface; and
transmitting data between the BSS and the core network through the IP bearer channel, in the process of transmitting the BSS transmits received data transparently without performing codec conversion.

2. The method of claim 1, **characterized by** further comprising:
negotiating, by the core network, a codec format between both sides of a session before transmitting the data; and
if the negotiation succeeds, applying the same codec format at the both sides of the session, and, forwarding, by the core network, the data between the both sides of the session transparently; or
if the negotiation fails, applying different codec formats at the both sides of the session, and inserting a Transcoder, TC, into the core network to convert the different codec formats.

3. The method of claim 1 or 2, **characterized in that**:
the core network interacts with the BSS through an extended Base Station Subsystem Application Part, BSSAP, signaling.

4. The method of claim 3, **characterized in that**:
the A-interface signaling protocol is the Signaling Transport, SIGTRAN, protocol, or the Stream Control Transmission Protocol, SCTP, or the Internet Protocol, IP; or
the A-interface signaling protocol is the Message Transport Part Level 3, MTP3, protocol, or the Message Transport Part Level 2, MTP2, protocol, or an L1, protocol.

5. The method of claim 4, **characterized in that**:
the L1 protocol is an E1 protocol, or a T1 protocol, or the Synchronous Digital Hierarchy, SDH, protocol, or the Synchronous Optical Network, SONET, protocol.

6. The method of claim 3, **characterized in that**:
the A-interface signaling protocol is a Message Transport Part Level 3, MTP3, user adaptation protocol.

7. The method of claim 3, **characterized in that**:
when the data is transmitted between the BSS and the core network through the IP bearer channel, A-interface data transmission is performed through the Real-time Transport Protocol, RTP, the User Datagram Protocol, UDP, or the IP protocol.

8. The method of claim 1, **characterized in that** the core network comprises a Mobile Switching Center, MSC, and a Media Gateway, MGW, and the establishing the IP bearer channel passing through the A-interface between the BSS and the core network comprises:
obtaining, by the BSS and the MGW, IP information of an opposite party, and establishing the IP bearer channel according to the obtained IP information.

9. The method of claim 8, **characterized in that** the obtaining of the IP information of the opposite party by the BSS and the MGW comprises:
sending, by the MSC, a request of obtaining MGW IP information to the MGW;
returning, by the MGW, its own IP information to the MSC after receiving the request;
sending, by the MSC, the received MGW IP information to the BSS; and
sending, by the BSS, its own IP information to the MGW directly after receiving the MGW IP information, or sending, by the BSS, its own IP information to the MSC and sending, by the MSC, the BSS IP information to the MGW.

10. The method of claim 9,
the sending, by the MSC, the request of obtaining the MGW IP information to the MGW comprises: sending, by the MSC, the request of obtaining the MGW IP information to the MGW through an endpoint establishment request message, namely, an ADD_REQ message; and
the returning, by the MGW, of its own IP information to the MSC comprises: returning, by the MGW, its own IP information to the MSC through an endpoint establishment response message, namely, an ADD_REPLY message.

11. The method of claim 9, **characterized in that** the sending, by the MSC, the received MGW IP information to the BSS comprises:
sending, by the MSC, the received MGW IP information to the BSS through an ASSIGNMENT_REQ message or a Handover-Request message;

12. The method of claim 11, **characterized in that**:
the IP information is contained in a Circuit Identification Code, CIC, element of the ASSIGNMENT_REQ message or the Handover-Request message for being sent; or
a Transport Layer Address element is added in the ASSIGNMENT_REQ message or the Handover-Request message, and the IP information is contained in the added Transport Layer Address element for being sent.

13. The method of claim 9, **characterized in that** the sending, by the BSS, of its own IP information to the MGW comprises:
sending, by the BSS, its own IP information to the MGW through an IuUP Init message, namely, an UP initialization message.

14. The method of claim 9, **characterized in that** the sending, by the BSS, of its own IP information to the MSC comprises:
sending, by the BSS, its own IP information to the MSC through an ASSIGNMENT COMPLETE message or a Handover-Request_ACK message.

15. The method of claim 14, **characterized in that**:
the IP information is contained in a Circuit Identification Code, CIC, element of the ASSIGNMENT COMPLETE message or the Handover-Request_ACK message for being sent; or
a Transport Layer Address element is added in the ASSIGNMENT COMPLETE message or the Handover-Request_ACK message, and the IP information is contained in the added Transport Layer Address element for being sent.

16. The method of claim 9, **characterized in that** the sending, by the MSC, of the BSS IP information to the MGW comprises:
sending, by the MSC, the BSS IP information to the MGW through an endpoint attribute modification request message, namely, a MODIFY_REQ message.

17. The method according to any one of claims 8-16, **characterized in that**:
the IP information is an IP address plus a User Datagram Protocol, UDP port ID, or an IP address plus the CIC.

18. The method of claim 1 or 8, **characterized in that** the core network comprises the MSC and the MGW, and the establishing the IP bearer channel passing through the A-interface between the BSS and the core network further comprises:
performing, by the BSS and the MGW, Session Description Protocol, SDP, negotiation through the MSC.

19. The method of claim 18, **characterized in that** performing the SDP negotiation comprises:
sending, by the MSC, Payload Type, PT, information to the MGW when establishing an endpoint at an access side;
sending voice/data codec SDP information containing the PT information to the BSS, and receiving actually applied voice/data codec SDP information returned by the BSS; and
judging, by the MSC, whether a preferred PT contained in the actually applied voice/data codec SDP information is consistent with the PT sent by the MSC to the BSS, and sending changed PT information to the MGW if the PT is inconsistent.

20. The method of claim 19, **characterized in that**:
the MSC sends the voice/data codec SDP information to the BSS through an ASSIGNMENT_REQ message, and the BSS returns the actually applied voice/data codec SDP information to the MSC through an ASSIGNMENT COMPLETE message; or
the MSC sends the voice/data codec SDP information to the BSS through a Handover-Request message, and the BSS returns the actually applied voice/data codec SDP information to the MSC through a Handover-Request_ACK message.

21. The method of claim 20, **characterized in that**:
a "Speech SDP Information list" element is added into the ASSIGNMENT_REQ or ASSIGNMENT COMPLETE or Handover-Request or Handover-Request_ACK message, and the voice/data codec SDP information is contained in the added "Speech SDP Information list" element.

22. The method of claim 19 or 20, **characterized in that**:
the PT information in the voice/data codec SDP information further indicates whether to support redundancy transmission stipulated by a protocol.

23. The method of claim 20, **characterized in that**:
the ASSIGNMENT_REQ message and the Handover-Request message contains Channel Type information;
a composition sequence of the voice/data codec SDP information corresponds to a composition sequence of the Channel Type information; and
the voice/data codec SDP information does not contain Speech Version information contained in the Channel Type information, or the voice/data codec SDP information further contains the Speech Version information contained in the Channel Type information.

24. The method of claim 18, **characterized in that** performing the SDP negotiation comprises:
sending, by the MSC, redundancy information to the MGW when establishing an endpoint at an access side; and
sending, by the MSC, voice/data codec SDP information containing the redundancy information to the BSS.

25. The method of claim 24, **characterized in that** the sending, by the MSC, of the voice/data codec SDP information containing the redundancy information to the BSS comprises:
sending, by the MSC, the voice/data codec SDP information containing the redundancy information to the BSS through an ASSIGNMENT_REQ message; or
sending, by the MSC, the voice/data codec SDP information containing the redundancy information to the BSS through a Handover-Request message.

26. A mobile communication system based on an A-interface, **characterized by** comprising a Base Station Subsystem, BSS, and a core network communicated through the A-interface, and further comprising:
a channel establishment module, adapted to establish an Internet Protocol-based, IP-based, voice call session bearer channel between the BSS and the core network, wherein the session bearer channel passes through the A-interface between the BSS and the core network; and
a transmitting module, adapted to encapsulate session data based on the Internet Protocol, IP, and transmit the session data over the session bearer channel through the A-interface.

27. The system of claim 26, **characterized by** further comprising:
a Transcoder, TC, adapted to perform codec conversion for the transmitted session data; and
a negotiating module, adapted to negotiate a codec format of the transmitted session data before the IP-based voice call session bearer channel is established between the BSS and the core network, and insert the TC into the core network to transcode the transmitted session data if the codec format is inconsistent.

28. The system of claim 26, **characterized in that** the core network comprises a Mobile Switching Center Server, MSS, and a Media Gateway, MGW, wherein:
the MSS is adapted to obtain MGW IP information in the process of establishing the bearer channel, and send the obtained MGW IP information to the BSS; and
the BSS is adapted to send its own IP information to the MGW after receiving the MGW IP information; or send its own IP information to a Mobile Switching Center, MSC, and make the MSC forward this IP information to the MGW.

29. The system of claim 28, **characterized in that** the MSS is further adapted to:
send Payload Type, PT, information to the MGW in the process of establishing the bearer channel, and send voice/data codec SDP information containing the PT information to the BSS;
receive actually applied voice/data codec SDP information returned by the BSS, and then judge whether a preferred PT contained in the voice/data codec SDP information actually applied by the BSS is consistent with the PT sent by the MSC to the BSS; and
send changed PT information to the MGW if the PT is inconsistent.

30. The system of claim 26, **characterized in that**:
the A-interface signaling-plane protocol is the Signaling Transport, SIGTRAN, protocol, or the Stream Control Transmission Protocol, SCTP, or the IP protocol, or the Message Transport Part Level 3, MTP3, protocol, or the Message Transport Part Level 2, MTP2, protocol, or a L1, protocol.

31. The system of claim 26, **characterized in that**:
the A-interface user-plane signaling is a Real-time Transport Protocol, RTP, or a User Datagram Protocol, UDP, or an IP protocol.

32. The system according to any one of claims 26-31, **characterized in that**:
the core network interacts with the BSS through extended Base Station Subsystem Application Part, BSSAP, signaling.

33. A mobile communication core network, comprising a Mobile Switching Center Server, MSS, and a Media Gateway, MGW, and **characterized by** further comprising:
a channel establishment module, in communication with the MSS, and adapted to: establish an Internet Protocol-based, IP-based, voice call session bearer channel between a Base Station Subsystem, BSS, and the MGW, wherein the session bearer channel passes through an A-interface between the BSS and the core network and is adapted to transmit session data encapsulated through the IP and transmitted through the A-interface.

34. The mobile communication core network of claim 33, **characterized by** further comprising:
a Transcoder, TC, in communication with the MGW, and adapted to perform codec conversion for the transmitted session data; and
a negotiating module, in communication with the MSS, and adapted to negotiate a codec format of the transmitted session data before the IP-based voice call session bearer channel is established between the BSS and the core network, and insert the TC to transcode the transmitted session data if the codec format is inconsistent.

35. The mobile communication core network of claim 33, wherein the MSS is further adapted to:
obtain MGW IP information in the process of establishing the bearer channel, and send the obtained MGW IP information to the BSS; and
send BSS IP information sent by the BSS to the MGW.

36. The mobile communication core network according to any one of claims 33-35, **characterized in that** the MSS is further adapted to:
send Payload Type, PT, information to the MGW in the process of establishing the bearer channel, and send voice/data codec SDP information containing the PT information to the BSS;
receive actually applied voice/data codec SDP information returned by the BSS, and then judge whether a preferred PT contained in the voice/data codec SDP information actually applied by the BSS is consistent with the PT sent by the MSC to the BSS; and
send changed PT information to the MGW if the PT is inconsistent.

37. A Base Station Subsystem, BSS, **characterized by** comprising:
a transmitting module, adapted to encapsulate session data based on an Internet Protocol, IP, and transmit the session data over a session bearer channel through an A-interface, wherein the session bearer channel is an IP-based voice call session bearer channel between the BSS and a core network and passes through the A-interface between the BSS and the core network.
